# EUROPEAN PATENT SPECIFICATION

(11) **EP 0 306 715 B1**
(45) Date of publication and mention of the grant of the patent: **24.02.1993**
(21) Application number: 88112899.5
(22) Date of filing: 08.08.1988
(51) Int. Cl.: G11B 33/08, G11B 5/596, G11B 5/55

(54) **Control system of magnetic head positioners of a multipositioner magnetic disk storage apparatus**
Kontrolsystem für Magnetkopfpositionierer in einem magnetischen Plattenspieler mit mehreren Positionierern
Système de contrôle de positionneurs de tête magnétique pour un appareil d'enregistrement à disque magnétiques comprenant plusieurs positionneurs

(30) Priority: 11.08.1987 JP 201515/87; 14.09.1987 JP 230568/87
(43) Date of publication of application: 15.03.1989
(73) Proprietor: FUJITSU LIMITED, Kawasaki-shi, Kanagawa 211 (JP)
(72) Inventor: Aruga, Keiji, Hiratsuka-shi Kanagawa, 259-12 (JP); Mizoshita, Yoshifumi, Tama-shi Tokyo, 206 (JP); Iwatsubo, Masahito, Tama-ku Kawasaki-shi Kanagawa, 214 (JP); Hatagami, Toshifumi, Machida-shi Tokyo, 194 (JP)
(74) Representative: Schmidt-Evers, Jürgen, Dipl.-Ing.

(56) References cited:
- EP-A- 0 164 642
- EP-A- 0 217 460
- PATENT ABSTRACTS OF JAPAN, vol. 9, no. 161 (P-370)(1884), 5 July 1985

## Description

The invention relates to an apparatus as disclosed in the preamble of claim 1.

The present invention relates to a control system of a magnetic disk storage apparatus comprising magnetic head positioners (hereinafter simply referred to as "positioners") disposed in such an apparatus. In particular the invention relates to a control system for preventing a magnetic head under read/write operation from off-track due to a mechanical vibration caused by a shock or especially by simultaneous seek operation of the other magnetic head in a multi-positioner apparatus as disclosed in the below cited prior art.

As the requirement for capacity for storing information increases, storage capacity of a magnetic disk is substantially increased approximately up to a track density of 40 tracks/mm (1000 tracks/inch) namely, track pitch of 20 micrometer. During a read/write operation of the apparatus, the magnetic head must be positioned on a track formed on the magnetic disk with high accuracy. Recently, the accuracy is reaching to a Sub-micron order, tending to be further elevated to a higher accuracy.

A magnetic disk storage apparatus usually includes a plural number of magnetic disks assembled around a rotating spindle, forming a magnetic disk assembly. Due to the vast quantity of the information stored in the magnetic assembly, there tends to occur concurrent access where two or more positioners are under access operation simultaneously. There has been also developed and used in practice a multi-positioner magnetic disk storage apparatus having plural positioners which are operable independently from each other. In the following such an apparatus is described more in detail.

There are two kinds of operations of a positioner, namely, a seek operation, may be referred to as a coarse access operation, and a track follow-up operation, may be referred to as a fine access operation. In the seek operation, the positioner operates to transfer the relevant magnetic head supported by the positioner from the present track to a target track under control of a central controller, may be a computer. The track following operation starts when the magnetic head reaches a position extremely near the target track, and the positioner is driven such that the magnetic head can accurately follow the target track for read/write operation. This state of the magnetic head is referred to as 'on track'. Naturally, in a multi-positioner magnetic disk apparatus, there occurs a case where one of the positioners is under a follow-up operation, and the other under seek operation at the same time. The later positioner is driven with a high accelerating force during the seek operation, being subject to a strong reaction force. The reaction force causes a strong mechanical vibration of the storage apparatus, resulting in causing off-track of the magnetic head supported by the former positioner under read/write operation. Such mechanical interference between the positioners has been a serious, inevitable problem inherent to the multi-positioner magnetic disk storage apparatus. Apparently, when all the magnetic heads are under read/write operation, such problem does not occur.

There are two types of positioners in magnetic disk storage apparatus, a linear type and a rotary type. In a linear type positioner, the relevant magnetic heads are driven along a radial direction towards the center of the rotating magnetic disk assembly, while in a rotary-type positioner, the magnetic heads are driven along an arc across the engaging magnetic disk surface, and the positioner is moved in forward and backward rotation around a rotating axis of the positioner. In a multi-positioner magnetic disk storage apparatus having linear-type positioners arranged in adjacent positions, the above-described mechanical interference is more serious in comparison with that having rotary-type positioners. This is because the reaction force of the linear-type positioner is much higher than that of the rotary-type positioner. Particularly, when the linear-type positioners are stacked one above another and the moving directions of the magnetic heads are the same, the full reaction force affects adversely the positioners under read/write operation.

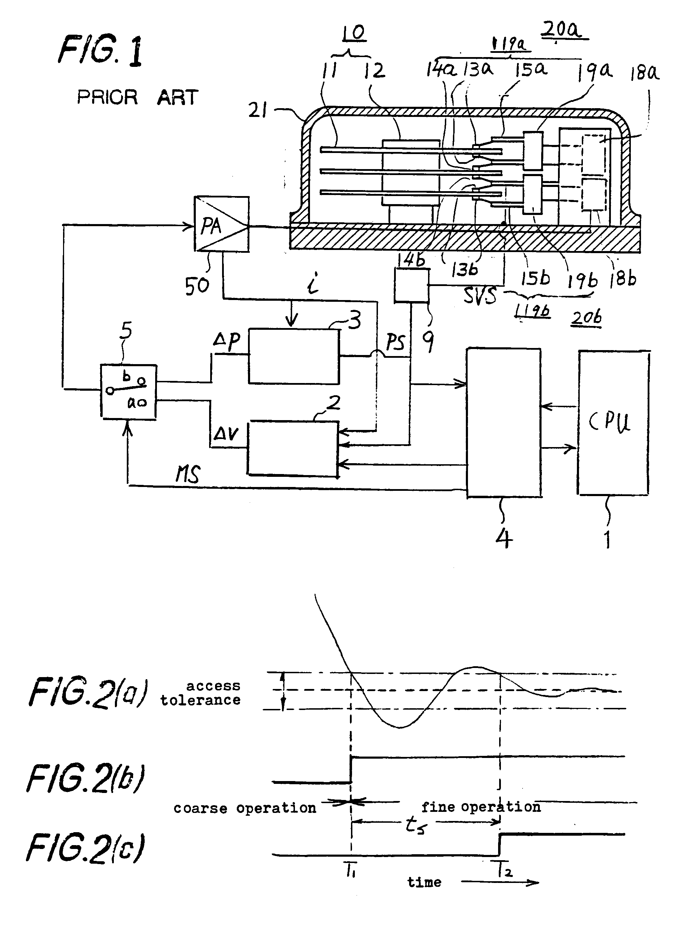

Fig.1 is a schematic diagram illustrating a prior art control system of a multi-positioner magnetic disk storage apparatus. In the magnetic disk storage apparatus, a plural number of magnetic disks 11 (shown as 3 pieces of disks) as recording media, are stacked in parallel with a fixed spaces around a spindle 12 which is rotated by a motor (not shown), forming a magnetic disk assembly 10. Two pairs of read/write heads 13a, 13b, and servo-heads 14a, 14b are supported respectively by positioners 20a, 20b comprising head arms 15a, 15b, carriages 19a, 19b and motors 18a, 18b. Both positioners 20a, 20b are driven independently under control of respective control circuits (only one series of circuits is shown in Fig.1, thus suffix a or b of reference numerals are dropped). The head arms 15a, 15b are fixed to carriages 19a, 19b which are driven by voice coil motors (hereinafter referred to as VCMs) 18a, 18b along respective seek directions or access directions. The VCMs 18a, 18b comprise drive coils, magnets and magnetic circuits including yokes (not shown). The magnetic heads 13a, 13b, 14a, 14b, head arms 15a, 15b, and carriages 19a, 19b, respectively form the moving members 119a, 119b. Usually, the magnetic head positioners 20a, 20b and magnetic disk assembly 10 are installed within a housing 21 for dust-proof.

The control circuits of the positioners are described. A position signal generator 9 receives servo-signals SVS sent from the servo-head 14a, and outputs position signals PS. A velocity controller 2 receives the position signal PS and generates velocity error signals ΔV. A magnetic head positioner controller 4, in response to access command signals sent from a relevant central computer (CPU) 1, controls the velocity controller 2 to output the velocity error signals ΔV for controlling coil current of a VCM 18a, which controls the rotating speed of the VCM 18a. In addition, when the magnetic head 14a reaches in the vicinity of the target track, the magnetic head positioner controller 4 issues a coarse/fine switching signal MS to activate a switch 5 which will be described later.

A positioning controller 3 receives the position signal PS, providing the position signal PS with amplifying processing, integral processing, and differential processing (P-I-D processing), adding detection current i outputted from a power amplifier 50 to the processed position signal PS, and filtering the resultant current through a low-pass filter (not shown), thus generating a position error signal ΔP.

The switch 5 operates such that the velocity error signal ΔV is sent to the power amplifier 50 under a coarse access signal, and the position error signal ΔP is sent to the power amplifier 50 under a fine access signal. Both of position error signal ΔP and velocity error signal ΔV are amplified by the power amplifier 50 and fed to the coil of VCM 18a.

The operation of the magnetic head positioner control system of the prior art magnetic disk storage apparatus shown in Fig.1 is described briefly referring to Fig,2.

Fig.s 2(a)-2(c) are time diagrams illustrating the switching operation of the switch 5. As will be described later, these time diagrams are also applicable to magnetic disk storage apparatus according to the present invention. On the ordinates of Fig.2(a), Fig.2(b), and Fig.2(c), distance between a target track (or a target cylinder) and the present position of the relevant magnetic head, signal height of coarse/fine switching signal MS, and that of a seek end signal, are respectively taken. On the abscissa, time is taken.

The seek operation is performed as follows. The magnetic head positioner controller 4, after receiving an access command signal from the CPU 1, calculates the distance, namely number of tracks, between the target track and the present position of the magnetic head 14, generating a criterion velocity Vc by referring to a velocity-time function having a predetermined pattern in storage such as a trapezoidal shape. The position signal generator 9 generates a position signal PS basing on the servo-signal SVS supplied from the servo-head 14. A real velocity Vr is generated in the velocity controller 2 by processing the position signal PS sent from the position signal generator 9. A velocity error signal ΔV is generated in the velocity controller 2 by comparing the real velocity signal Vr with the criterion velocity Vc, and is outputted to a terminal a of the switch 5. At this stage, the terminal a is ON state by the absence of the coarse/fine switching signal MS. Thus, the velocity error signal ΔV is sent to the power amplifier 50, being amplified and applied to the coil of the VCM 18. As the result, the positioner 20 is driven with velocity varying following the trapezoidal time pattern. That is, the positioner 20 is subject to acceleration, non-acceleration and decceleration in the order. Hereby, substantially strong reaction forces are caused in the access direction in which the moving member 119a of the positioner 20a is driven.

When the magnetic head positioner controller 4 detects that the servo-head 14 reaches in the vicinity of the target track within a predetermined tolerance at time T₁ as indicated in Fig,2(a), then a coarse/fine switching signal MS is issued from the controller 4 to the switch 5, making the terminal b ON and the terminal a OFF. As the result, application of the velocity error signal ΔV to the power amplifier 50 is terminated, and the position error signal ΔP outputted from the positioning controller 3, is applied to the amplifier 50, as indicated in Fig.2(b), thus the positioner 20 enters in a fine access operation or track following operation.

The position signal PS generated from the servo-signal SVS which is sensed by the servo-head 14 is amplified by the power amplifier 50 and applied to the coil of the VCM 18a. Thus the off-track of the magnetic head 14 is driven to be corrected. After a settling time tₛ elapsed from the time T₁ and no off-track of the servo-head 14 beyond the predetermined limit during the time is assured, a seek end signal SE is issued from the magnetic head positioner controller 4 at time T₂ as indicated in Fig.2(c), allowing the following read/write operation of the relevant magnetic heads 13.

The capability of the above-described prior art control system for preventing the magnetic head from off-track, namely a servo-gain of the system, is limited within a value. Furthermore, the limit is narrowed by the mechanical interference between a positioner under seek operation and another one under read/write operation, causing mechanical vibration of the apparatus due to the reaction force of the former positioner. This mechanical interference is essentially inevitable in a multipositioner magnetic disk storage apparatus. Particularly, when the resonant frequency of the mechanical vibration is low, the adverse effect becomes more serious.

There are several known proposals for overcoming the above problems caused by mechanical vibration.

A magnetic disk storage apparatus generally is known from the EP-A-0 165 755. The compensation signal provided in said known apparatus is an output signal from the seek drive circuit and is merely proportional to the drive force, exerted to the magnetic head which is just in seek operation. This output signal is fed into the drive circuit of the other magnetic head moving this head in a direction opposite to the force only expected to become effective on this other head.

An optical disk storage apparatus is disclosed in the JP-A-60-121578 and in the JP-A-61-170967. In the apparatus of these documents an acceleration sensor secured to a housing of the apparatus detects mechanical vibration caused by an external force subjected to the apparatus. The optical storage apparatus of Moriya et al. is of a single positioner type. No mechanical interference problem, therefore, is disclosed by Moriya et al. A low-pass filter having band width ranging from 1 Hz to 1000 Hz is used to filter signals outputted from the acceleration sensor to eliminate high frequency noise contained in the signal.

Another optical disk apparatus with an optical recording system is known from the EP-A-0 164 642. Said apparatus comprises acceleration sensors arranged to the basis of the disk support. Detected shocks generate electrical signals which are used for compensation of misalignments between the disk and the focus of said optical system, the misalignments being caused by said shocks and the compensation is performed by adjusting the optical focus.

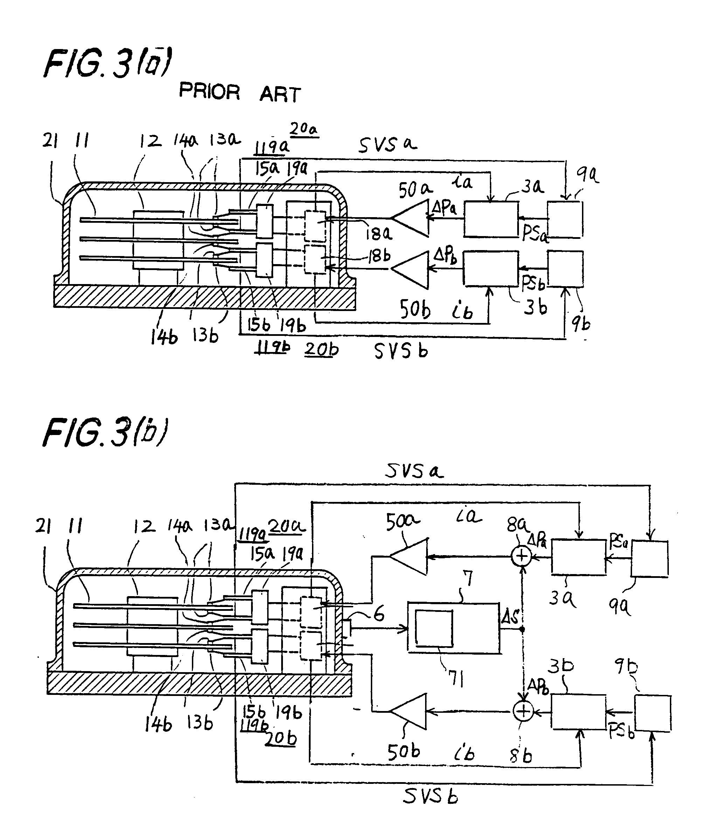

Figur 3a shows a substantially schematic diagram of another prior art magnetic disk storage apparatus which is described lateron.

### SUMMARY OF THE PRESENT INVENTION

An object of the present invention is to provide a new multi-positioner magnetic disk storage apparatus with means preventing off-track of magnetic heads under read/write operation caused by a seek operation of another positioner.

This object is achieved by an apparatus according to claim 1. Preferred embodiments are disclosed refering to the subclaims.

The present invention provides a system including, means for detecting mechanical vibration caused by a positioner under seek operation, and means for compensating the driving current of a coil of a VOM of another positioner just under simultaneous read/write operation basing on the detected mechanical vibration to eliminate undesirable effect of the mechanical vibration.

Fig 3b shows a magnetic disk storage apparatus according to the present invention, illustrating only the means for fine access operation to show the difference between both magnetic disk storage apparatus of Fig 3a and of Fig 3b. In the prior art magnetic disk storage apparatus, as shown by Fig.3(a), two series of mutually independent fine access circuits, including positioning controllers 3a and 3b, are disposed in response to two magnetic servo-heads 14a and 14b. Position error signals ΔPa and ΔPb are outputted from the positioning controllers 3a and 3b respectively, being applied to amplifiers 50a and 50b to control VCMs 18a and 18b respectively.

In the magnetic disk storage apparatus according to the present invention shown in Fig.3(b), an acceleration sensor 6 secured to the housing 21 of the magnetic disk storage apparatus and a vibration follow-up circuit 7 are disposed. Assuming that the positioner 20a is under seek operation and the positioner 20b under read/write operation, the operation of the circuits is described. The sensing current from the sensor 6 indicating the presence of mechanical vibration caused by the seek operation of the magnetic head positioner 20a, is received by the vibration follow-up circuit 7. The sensing current is filtered by a low-pass filter 71, being converted into a mechanical vibration follow-up signal ΔS which is added to position error signal ΔPb issued from the positioning controller 3b through an adder 8b. The composed signal in the adder 8a is sent to a power amplifier 50b to drive a VCM 18b of the positioner 20b such that the effect of the mechanical vibration is compensated, and good track following of the magnetic head 14b is achieved. Of course, when the positioners 20a is under read/write operation, and the positioner 20b under seek operation, the relevant positioner controlling system works in the similar manner.

The above-described mechanical compensation of reaction force caused by a positioners under seek operation, is performed under the following principle. Assuming that m denotes mass of the moving member 119 of a positioner 20, α is detected acceleration along the access direction of the positioner, caused by a seek operation of the other positioner, and Bl denotes a positioner force constant (driving force subjected to a positioner per unit coil current of the associated VCM contained in the positioner), the compensating current i_{comp} is given by

${\text{i}}_{\text{comp}} \text{= mα/Bl.}$

since, the force subjected to the positioner is equal to mα.

In practice, there is found no delay and mutual displacement between the mechanical vibration of the housing 21 and that of the magnetic disks 11 enclosed in the housing 21. The movement of the magnetic disks 11, therefore, can be detected indirectly by that of the housing 21 which is sensed by the acceleration sensor 6 secured to the housing 21. This fact requires the electrical characteristics of the low-pass filter 71 to be free from any phase shift. In comparison with a conventional low-pass filter, the phase shift between input waveform and output waveform must be maintained within a small degrees, such as below 10 degrees, in the specified frequency range. The limited phase shift contributes to achieve an effective compensation for the adverse effect of the mechanical interference between the both positioners. Of course, the characteristics of the low-pass filter is desirable to have flat gain characteristics as possible in the specified low frequency range, and to have low gain characteristics in a high frequency region.

In order to relax the shock of the reaction force caused by a positioner under seek operation, an elastic suspension mechanical system for the positioners, is proposed by the inventors of the present invention, wherein the fixed portion of positioners such as a yoke, coils, and magnets, are suspended against a housing of the magnetic disk storage apparatus by spring plates and damping elements disposed between the housing and the fixed portions of the positioners. By this mechanism, the mechanical shock is reduced to some degree, but a new mechanical resonant vibration of 100 to 150 Hz is caused. The effect to prevent the off-track of the relevant magnetic heads is still unsatisfactory.

Further details and advantages of the present invention will be apparant when reading the following description of embodiments and by referring to the following drawings wherein like reference numerals represent like part.

### BRIEF DESCRIPTION OF THE DRAWINGS

Fig. 1 is a schematic diagram illustrating a prior art control system of a multi-positioner magnetic disk storage apparatus;
Fig.s 2(a)-2(c) are time diagrams illustrating the switching operation of the switch 5 of Fig.1;
Fig.3(a) and Fig.3(b) are substantially schematic diagrams of a prior art magnetic disk storage apparatus and of a magnetic disk storage apparatus according to the present invention, illustrating means for fine-access operation;
Fig.4(a) is a partial cross-sectional view of an elastic suspension structure for supporting a positioner, and Fig.4(b) is a partly broken perspective view thereof;
Fig.5 is a diagram illustrating a positioner control system of a two-positioner magnetic disk storage apparatus of a first embodiment of the invention.
Fig.6 is a more detailed diagram illustrating one of the two series of circuits of the position control system in connection of the mechanical vibration follow-up loop shown in Fig.5;
Fig.7 is a further detailed circuit block diagram of the acceleration sensor 6 and the mechanical vibration follow-up circuit 7 of Fig.6;
Fig.8(a) and Fig.8(b) are diagrams illustrating frequency characteristics of a typical low-pass filter currently used in the art;
Fig.9(a) and Fig.9(b) are diagrams illustrating frequency characteristics of the low-pass filter 71 of the present invention;
Fig.10(a) and Fig.10(b)are time diagrams illustrating the height of position error signals during an operation with respect to a prior art magnetic disk storage apparatus without mechanical vibration follow-up loop (Fig.10a) and that with a mechanical vibration follow-up look according to the present invention (Fig.10b);
Fig.11 is a circuit block diagram, illustrating a part of circuit constitution of a second embodiment of the invention including a switch;
Fig.12 is a substantially schematic plan view illustrating an arrangement of magnetic head positioners disposed in a plane in a centripetal configuration; and
Fig.13 is a schematic plan view of a multi-positioner magnetic disk storage apparatus having rotary positioner, to which the present invention is applied.

### DESCRIPTION OF PREFERRED EMBODIMENTS

In the following description, otherwise mentioned, a magnetic disk storage apparatus of Fig. 3(b), as an embodiment of the present invention, is a multi-positioner magnetic disk storage apparatus and is assumed having two positioners 20a and 20b of linear type, being stacked one above another, and supporting read/write heads 13a, 13b and servo-heads 14a, 14b. Both positioners 20a, 20b are operable independently of each other, and the access direction of each magnetic heads coincide with each other, being one of radial directions of the relevant magnetic disk 11. Hereinafter, the suffix a and b will be omitted if the distinction of both positioners 20a and 20b is not necessary.

As stated before, the mechanical vibration of the magnetic disk storage apparatus caused by seek operation of a positioner has the following characteristics. In a low frequency region of hundreds Hz order, the phase shift between mechanical vibrations of the magnetic disks 11 and a housing 21 is negligibly small, and the amplitude of the mechanical vibrations is relatively large. The mechanical vibration of the magnetic disk 11, therefore, can be represented by that of the housing 21. In contrast, in a high frequency region, the phase shift is substantially large, but the vibration amplitude is favorably small. Therefore, the high frequency mechanical vibration can be neglected in the present invention. This phenomenon is confirmed by the inventors of the present invention experimentally and practically.

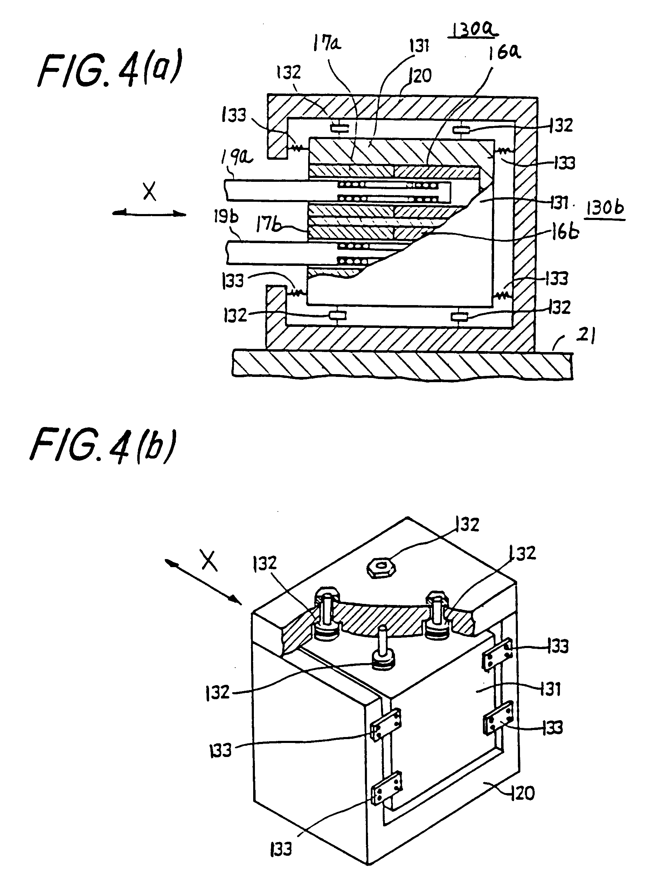

Before proceeding further, a suspending structure of the positioners 20 (20a and 20b) is described. Fig.4(a) is a partial cross-sectional view thereof, and Fig.4(b) is a partly broken perspective view thereof. The suspending structure is adopted in order to relax the shock of the reaction force caused by a positioner under seek operation, as described before. The moving portion of the positioner 20 including a carriage 19 is guided by a guide structure including ball bearings (not shown), and driven in the access direction, indicated by a twin arrowhead line X, by magnetic force generated by a coil 16 of the associated VCM 18. Fixed portions of the positioners 20, comprising magnetic circuits 130 of VCM 18 comprising a coil 16a, 16b, magnets 17a 17b a yoke 131, are elastically suspended inside a VCM housing 120 which is secured to the housing 21. Elastic movement in the access direction X of the positioners 20 is allowed by spring plates 133 bridging between the outer surface of the yoke 131 and the VCM housing 120. Shearing dampers 132 disposed between the inside surface of the housing 120 and the outer surface of the yoke 131 provide mechanical vibration of the housing 21 with an appropriate damping effect, depressing a peak value of the vibration amplitude. Each of the shearing dampers 132 has an elastic gum layer which is deformed by relative displacement between the VCM housing 120 and the yoke 131 along the access direction X. The gum layer is subject to shearing force, thus absorbing energy of the relevant mechanical vibration. As the result, the effect of reaction force caused by a positioner under seek operation is substantially relaxed and the mechanical vibration of a frequency higher than 300 Hz is eliminated. Thus, the off-track of a magnetic head under read/write operation is prevented. On the other hand, mechanical vibration along the X direction having a resonant frequency of about 150 Hz, is newly generated. Therefore, a further effective countermeasure to reduce the off-track of magnetic heads are still required. The above-described problem will be overcome by an additional improvement of a positioner control means using an acceleration sensor 6 secured to the housing 21.

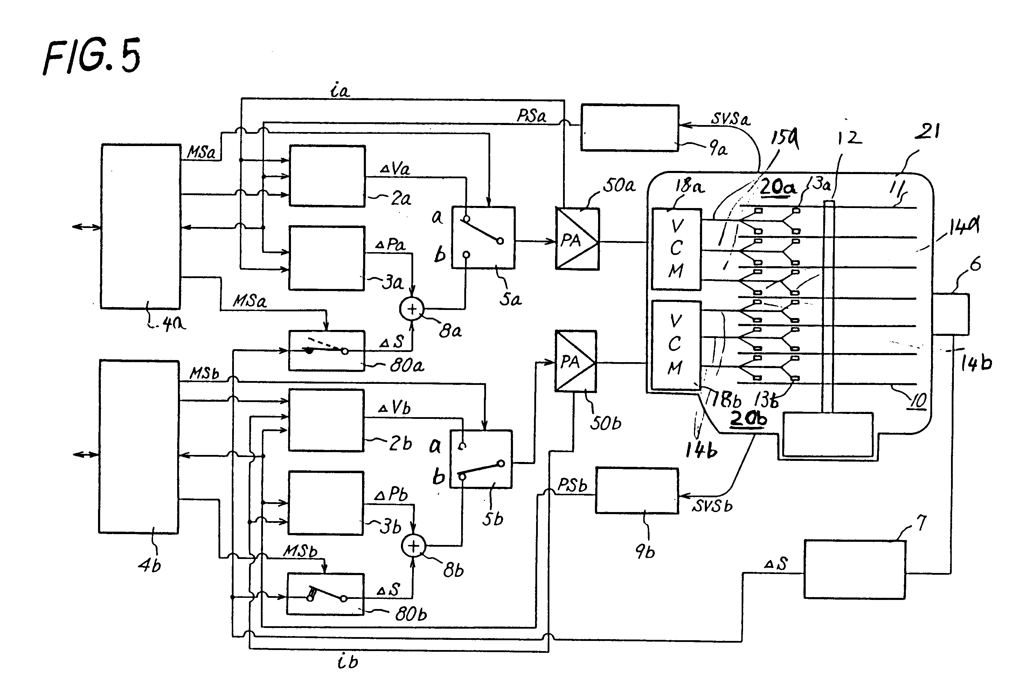

Fig.5 is a diagram illustrating a positioner control system of a two-positioner magnetic disk storage apparatus of a first embodiment according to the present invention. The apparatus has a conventional magnetic disk assembly 10 with seven pieces of magnetic disks 11 disposed around a spindle 12, and two linear type positioners 20a and 20b. Each positioner 20a or 20b supports three read/write heads 13a or 13b, and one servo-head 14a or 14b through a head arm 15a or 15b, driving the magnetic heads in a access direction. The above-described magnetic disk assembly 10 and positioners 20a and 20b are conventional ones, and enclosed in a housing 21 in dust-proof structure.

Corresponding to the positioners 20a and 20b, there are disposed two series of circuits respectively composed of magnetic head positioner controllers 4a and 4b, velocity controllers 2a and 2b, switches 5a and 5b, power amplifiers 50a and 50b, position signal generators 9a and 9b, and positioning controllers 3a and 3b. Both series of circuits are conventional ones and operated under access commands given from a central computer (not shown). Both series of circuits are operated independently of each other resulting in mechanical interference between both positioners as described before.

According to the present invention, a mechanical vibration follow-up loop is provided, and connected to the above two series of circuits for compensating the adverse effect of the mechanical interference to prevent the magnetic head from off-track under read/write operation. The follow-up loop is composed of an acceleration sensor 6, mechanical vibration follow-up controller 7, switches 80a and 80b, and adders 8a and 8b. The follow-up loop is controllably connected to both series of circuits through the switches 80a and 80b which is controlled by the magnetic head positioner controller 4a or 4b to be ON state when the relevant positioner 20 is under read/write operation. A mechanical vibration follow-up signals ΔSa or ΔSb outputted from the mechanical vibration follow-up controller 7 is supplied to an adder 8a or 8b, being added to a position error signals ΔPa or ΔPb sent from the positioning controller 3a or 3b. Other circuits such as the velocity controllers 2a and 2b, and positioning controllers 3a and 3b, are conventional ones.

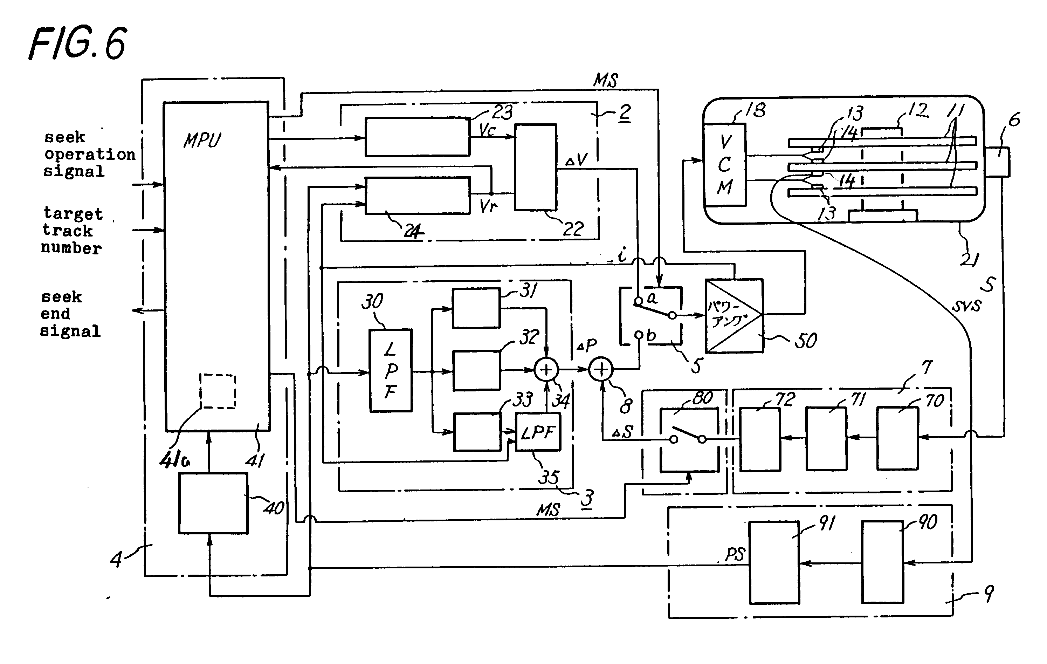

Fig.6 is a more detailed diagram illustrating one of the above-described two series of circuits in combination with the mechanical vibration follow-up loop shown in Fig.5. In the figure, suffix a or b of the reference numerals, is dropped.

The magnetic head positioner controller 4 is composed of a position detecting circuit 40 and a microprocessor unit (hereinafter referred to as MPU) 41 which includes a timer 41a. A position signal PS sent from the position signal generator 9 is processed such that the position of the servo-head 14 is detected by the position detecting circuit 40. Thereby the processed signal is inputted into the MPU 41 through the timer 41a.

When a seek operation signal and number of a target track are issued from a CPU (not shown) to the magnetic head positioner controller 4, the signals are received by the MPU 41 and processed. Under the seek operation signal, the terminal a of a switch 5 is ON, connecting the velocity controller 2 to the amplifier 50 to drive the VCM 18 of the positioner 20. When the position of the relevant magnetic servo-head 14 is detected to be extremely adjacent to the target track by the position detecting circuit 40, a fine/coarse switching signal MS is issued from the MPU 41, setting the terminal b of the switch 5 ON, connecting the positioning controller 3 to the amplifier 50. When a predetermined settling time tₛ elapsed after the issue of the signal MS, a seek end signal SE is issued from the MPU 41 allowing a read/write operation of the magnetic heads 13 to start.

The velocity controller 2 is a conventional one as described before, being composed of a criterion velocity generator 23, a velocity signal generator 24, and a velocity error signal generator 22. A criterion velocity signal Vc is generated in the circuit 23 under control of the MPU41. A real velocity signal Vr is issued from the velocity signal generator 24. Taking the difference between the criterion velocity signal Vc and the real velocity Vr, a velocity error signal ΔV is formed in the velocity error signal generator 22, and sent to the amplifier 50 through the terminal a of the switch 5 to drive the VCM 18.

For read/write operation, the positioning controller 3 is employed, being composed of the following circuits: a low-pass filter 30, an integration circuit 31, an amplifier 32, a differential circuit 33, an adder 34 and another low-pass filter 35. A position signal PS sent from a position signal generator 9 is filtered through the low-pass filter 30 to cut high frequency components thereof, being integrated by the integration circuit 31, differentiated and filtered by the differential circuit 33 and the low-pass filter 35, and being linearly amplified by the amplifier 32. The outputted currents of the three circuits are added by the adder 34 and outputted as a position error signal ΔP.

In a mechanical vibration follow-up loop, an acceleration sensor 6, a mechanical vibration follow-up circuit 7, and a switch 80 are disposed, being in series connection. The acceleration sensor 6 outputs an acceleration sense signal S when the side wall 21 is subject to a mechanical vibration caused by one of the positioners 20 under seek operation. The mechanical vibration follow-up circuit 7 comprises a high-pass filter 70, a low-pass filter 71 and a gain controller 72. The direct current component of the sense signal S is cut by the high-pass filter 70, and the low frequency component is filtered through the low-pass filter 71 having a low phase shift below 10 degrees and a high gain level in the specified low frequency range. The gain level of the filtered sense signal is controlled by the gain controller 72 to an appropriate level such that thus made mechanical vibration follow-up signal ΔS is later added to the position error signal ΔP in a right manner by an adder 8. A switch 80 is disposed between the mechanical vibration follow-up circuit 7 and the adder 8, and opened or closed depending on the absence or the presence of the MS signal indicating the change from coarse access to fine access.

A position signal generator 9 is also conventional one and comprises an automatic gain control (AGC) amplifier 90 and a signal generator 91. A servo-signal SVS is sensed by the relevant servo-head 14 engaging with a surface of one of the magnetic disks 11 where the signals SVS are recorded. The servo-signal SVS is gain-controlled by the AGC amplifier 90, converted into a position signal PS and outputted from the signal generator 91.

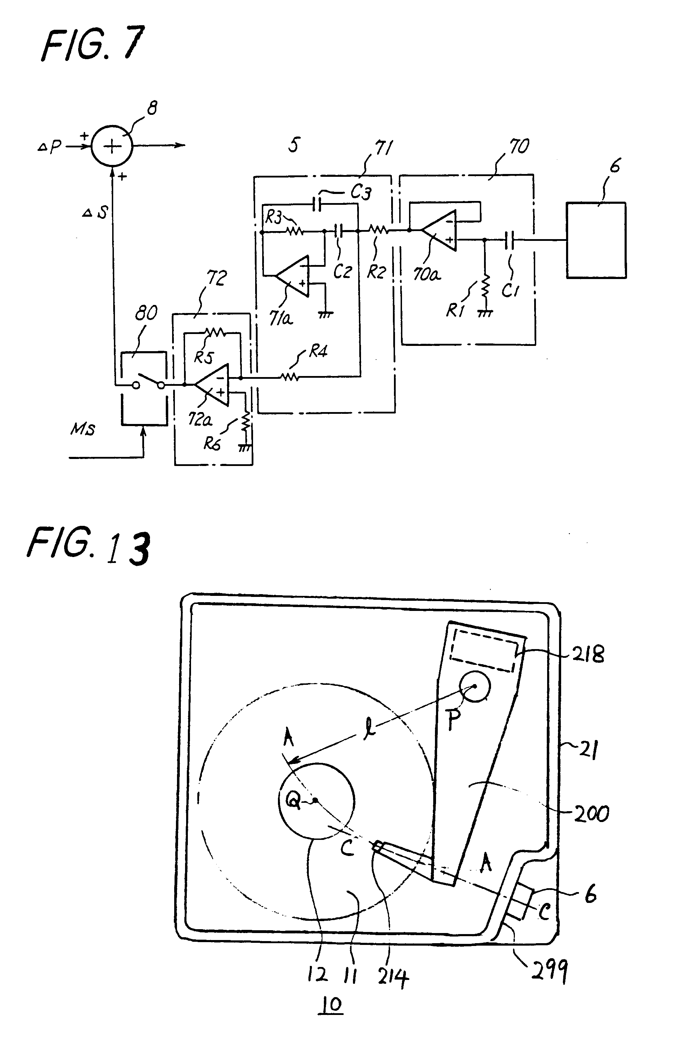

Fig. 7 is a further detailed circuit block diagram of the acceleration sensor 6 and the mechanical vibration follow-up circuit 7 of Fig.6. Generally, an acceleration sensor has a sense axes along which acceleration force is most clearly sensed as compared with other directions. The acceleration sensor 6, hereby, is one available in the market, such as a piezoelectric accelerometer, being is secured to the outer side wall of the housing 21 such that the sense axis thereof coincides with the seek direction of the positioner 20. Hereby, the acceleration sensor 6 is including circuits for stabilizing the output of the sensor 6 such as a charge amplifier and voltage amplifier (both not shown). Of course, the acceleration sensor 6 may be secured to the inside wall of the housing 21.

The high-pass filter 70 is an active filter passing high frequency components, being composed of an operation amplifier 70a, a condenser C1, and a resistor R1. The low-pass filter 71 is an active filter having a second order filter constitution, comprising an operation amplifier 71a, a condenser C2 and a resister R3 connected in series-parallel with the amplifier 71a, a parallel condenser C3, and a parallel resistor R4 as shown in Fig.7. The gain controller 72 comprises an operation amplifier 72a and resistors R5 and R6. The gain level can be set by properly selecting the resistor R5 and the ratio of the resistor R2 to the resistor R4.

The characteristics of the low-pass filter 71 may be an important factor for an embodyment of the present invention. Assuming that R2=R4 and C2=C3, the gain of the filter 71 is represented below:

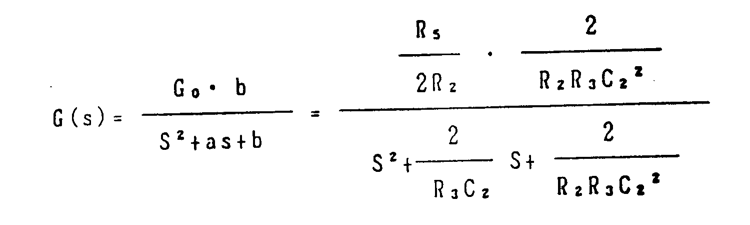

Hereby, GO=R5/2R2, representing a directive gain
A cute-off frequency f0, and a damping coefficient Q are given as follows:

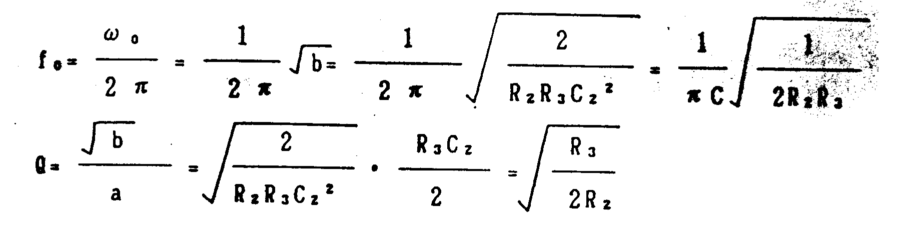

Thus, the cut-off frequency and the damping coefficient are selectively determined by selecting the values of R2(=R4), R3, and C2(=C3).

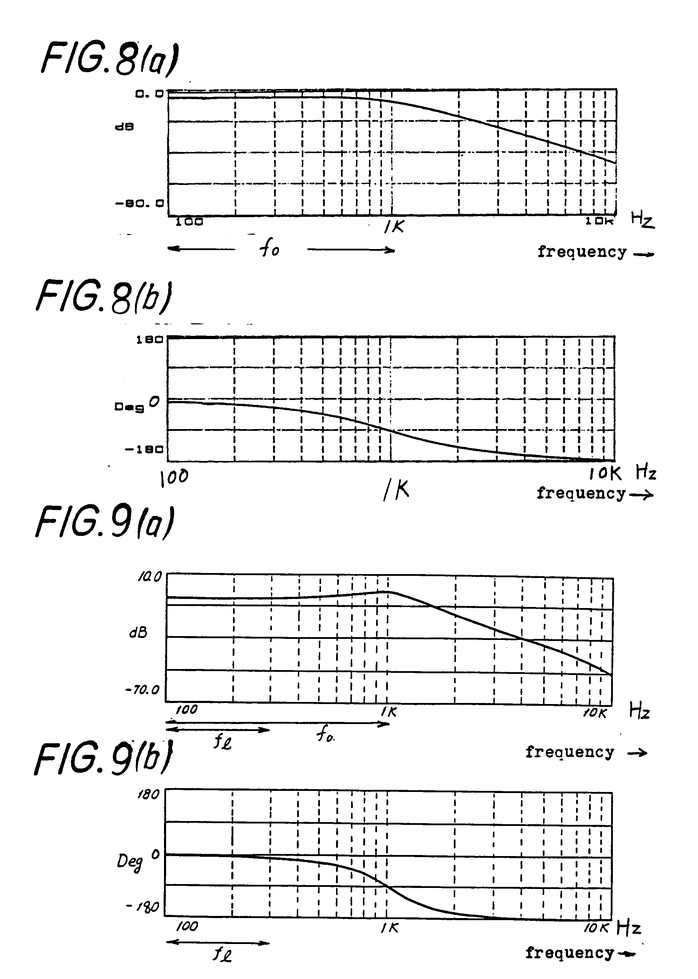

Fig.8(a) and Fig.8(b) are diagrams illustrating frequency characteristics of a typical low-pass filter currently used in the art, having a damping factor Q=0.7 and cut-off frequency f₀ of 980 Hz. A low-pass filter is generally designed to have a substantially flat gain characteristics in a low frequency range such as below 1 K Hz as shown in Fig.8(a). On the other hand, phase shift characteristics is not desirable as shown in Fig.8(b), wherein a considerable phase shift appears in the range above approximately 200 Hz. A low-pass filter of such characteristics having high phase shift in the specified low frequency range is not suitable for the low-pass filter to be used in the mechanical vibration follow-up circuit 7, because the feed back of the mechanical vibration follow-up signal ΔS is delayed, resulting in unfavorable compensation for the mechanical vibration of the magnetic disk storage apparatus, and failing to prevent the off-track of the magnetic head 14. According to the experience of the inventors, the allowable phase shift is limited below 10 degrees. If this limitation is applied to the above-described conventional low-pass filter, the effective frequency range is limited below 150 Hz as read from Fig.8(b), which is not applicable to the low-pass filter 71 of the present invention.

Fig.9(a) and Fig.9(b) are diagrams illustrating frequency characteristics of the low-pass filter 71 of the present invention, having a damping factor Q=1.76 and cutoff frequency f₀ of 980 Hz. As seen from Fig.9(a), the gain slightly increases in a frequency range near the cutting frequency f₀ of 1 KHz, but the gain in a low frequency range approximately from 100 Hz to 300 Hz is substantially high, and the gain in a frequency region exceeding 1 KHz is substantially low. While, as seen from Fig.9(b), the phase shift in the above frequency range from 100 Hz to 300 Hz is small and below 10 degree, exceedingly improved from the conventional low-pass filter. In conclusion, the low-pass filter 71 according to the present invention, has a high gain and low phase shift in a low frequency range which is distributing from 1/3 to 1/10 of the cutoff frequency, being favorable for the mechanical vibration follow-up and very low gain in a high frequency range over cutoff frequency, favorable for cutting high frequency signals. According to the inventors' study, the damping coefficient Q ranging from 1,5 to 2,0 is most desirable for a low-pass filter to be employed in the mechanical vibration follow-up circuit of the present invention. The low-pass filter 71 is not always composed as illustrated in Fig.7, and a low-pass filter having different circuit composition and elements, but similar characteristics, is applicable to the present invention.

The operation of a magnetic disk storage apparatus according to the present invention, shown in Fig.3(b), Fig.5 and Fig.6, is surveyed. It is assumed, hereby, that the positioner 20a is under seek operation and the positioner 20b under read/write operation. The magnetic head positioner controller 4a does not issue a fine/coarse switching signal MSa and the controller 4b issues a signal MSb. Under the absence of the signal MSa and the presence of the signal MSb, the terminal a of the switch 5a and the terminal b of the switch 5b are closed, and the switch 80a is opened and the switch 80b is closed. The velocity error signal ΔVa is applied to the power amplifier 50a through the closed terminal a of the switch 5a. While, the position error signal ΔPb is issued from the positioning controller 3b in a conventional manner, being fed to the power amplifier 80b through the adder 8b and the terminal b of the switch 5b. Thus, the VCM 18a is driven by the velocity error signal ΔVa, and the VCM 18b by the position error signal ΔPb.

The positioner 20a causes mechanical vibration which is sensed by the acceleration sensor 6. Sensing current S is issued from the sensor 6 and received by the vibration follow-up circuit 7. The sensing current S is filtered by the low-pass filter 71, being set on a proper gain level by the gain controller 72, and being converted into a mechanical vibration follow-up signal ΔS. The signal ΔS is fed to the adder 8b through the closed switch 80b. Both signals ΔS and ΔPb are added in the adder 8b. The composed current issued from the adder 8a is sent to the power amplifier 50b to drive a VCM 18b of the positioners 20b such that the effect of the mechanical vibration is compensated, resulting in good track following of the magnetic head 14b.

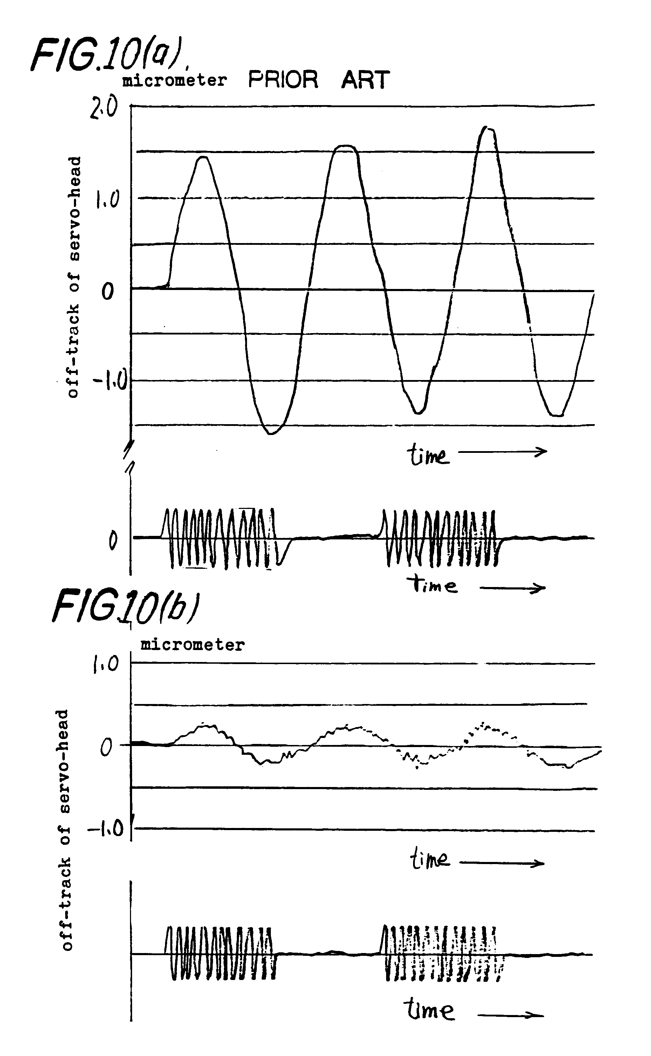

The effect of the mechanical vibration follow-up loop of the magnetic positioner control system of the present invention is confirmed by studying the following-up capability of the magnetic head. Fig.10(a) and Fig.10(b) are time diagrams illustrating the height of position error signals ΔPb (lower portion) under read/write operation, and ΔPa (upper portio) under simultaneous seek operation in the ordinate. The position error signal is proportional to the distance of off-track of the relevant magnetic head. The off-track of a magnetic disk storage apparatus of prior art without mechanical vibration follow-up loop is shown in Fig.10(a) and that of the present invention with a mechanical vibration follow-up loop in Fig.10(b). In the diagrams, scale of the off-track of the servo head 14a under seek operation is intentionally reduced as compared with that of the servo-head 14b under read/write operation for convenience.

In response to the repeated seek operation of the positioner 20a, the magnetic head 14b is subject to a off-track. The peak-to-peak amplitude of the off-track of the prior art magnetic disk storage apparatus comes up to around from 2 to 3 micrometers as shown in Fig.10(a), while that of the present invention is substantially reduced to a value below 0.5 micrometer as shown in Fig.10(b). As the result, in a multi-positioner magnetic disk storage apparatus, problems of off-track of a magnetic head under read/write operation caused by a simultaneous seek operation of other positioner, is favorably solved by the present invention.

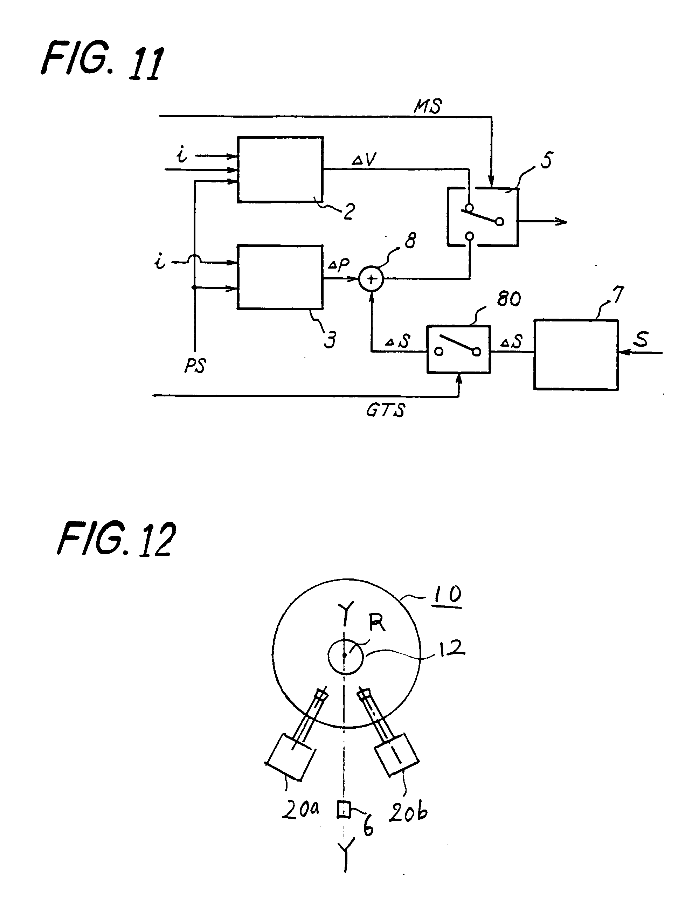

In a second embodiment of the present invention, an improvement is added to the first embodiment. Fig.11 is a circuit block diagram, illustrating a part of circuit constitution of a second embodiment. In the first embodiment, the switch 80a or 80b is controlled by a fine/coarse switching signal MS. In the second embodiment, the switch 80a 0r 80b is controlled by a gate signal GTS sent from the magnetic head positioner controller 4. When the settling time tₛ is prolonged due to factors other than the mechanical vibration detected by the sensor 6, such as a viorent external force, a predetermined settling time is set first by the signal GTS. The switch 80 is closed when the gate signal GTS is made ON, and the signal ΔS is sent to the adder 80 through the switch 80.

In the present invention, the acceleration sensor is used to detect the mechanical vibration of the magnetic disk storage apparatus sensing the vibration in the form of acceleration. However, a displacement sensor can be used instead of the acceleration sensor. Hereby, the detected current indicating alternative vibration amplitude of the housing is differentiated by a differential circuit to convert the displacement current to a acceleration current.

The above-described magnetic disk storage apparatus of the first and the second embodiments, are assumed to have two positioners of linear type, being stacked one above another. However, the present invention is applicable to a multi-positioner magnetic disk storage apparatus having more than two positioners, such as three positioners. Further, the present invention is also applicable to a magnetic disk storage apparatus wherein plural number of positioner are disposed on a plane in a symmetrical arrangement as shown in a substantially schematic plan view of Fig,12, and the access directions of each positioner 20a 0r 20b are arranged centripetally, that is, directing toward a common point, namely, the rotating center R of the relevant magnetic disk assembly 10. The mechanical vibration sensor 6 is positioned on the symmetrical axis Y-Y of the arrangement. The practically usable maximum angle between the symmetrical axis and the access direction of the positioner is desirable to be 30 degrees in order to obtain a favorable effect of the present invention.

Further, the present invention is applicable to a multi-positioner magnetic disk storage apparatus having rotary positioners, a plan view of which is schematically illustrated in Fig.13. The apparatus has two rotary positioner 218 rotatable around the center P by a VCM 218. A servo-head 214 engages with the surface of a magnetic disk 11 stacked in a magnetic disk assembly 10 having a spindle 12 around a rotating center Q. The magnetic head 214 is transferred along an arc orbit A-A having the center at the rotation center P of the positioner 200 and crossing the center point Q. The access direction of the magnetic head 214, therefore, is directed along a tangent of the arc A-A at each position of the arc A-A, successively and slightly changing depending on the position of the magnetic head 214. The positioner 200 and the magnetic disk assembly 10 are enclosed in a housing 21. An acceleration sensor 6 is disposed on a outside wall of the housing 21, at a depressed portion 299 which is formed such that the sensing direction of the sensor 6 coincides with an average access direction, indicated by a twin-heads arrow C-C, of the magnetic head 214. With such configuration, the coil current for driving the VCM 218 is compensated with a compensating current i_{com} in the similar manner of the first embodiment such that the magnetic head 214 under read/write operation is not subject to off-track caused by a simultaneous seek operation of other positioner. The compensating current is given by the following formula in good approximation:

${\text{i}}_{\text{com}} \text{= KJα/Blr.l}$

where
- Blr:: torque constant of positioner 200
- J :: moment of inertia
- l :: rotating radius of magnetic head 214
- K :: a constant
- **α :**: **detected acceleration**

It is apparent that the present invention is also applicable to a magnetic disk storage apparatus having a single magnetic head positioner of linear type or rotary type. The mechanical vibration, hereby, is caused by an external force exerted to the apparatus. The same vibration follow-up system, and a suspension structure for the magnetic head positioner as those of the first embodiment are applicable. In particular, the low-pass filter 71 included in the mechanical vibration follow-up circuit 7, shown in Fig.7, is substantially effective to cancel an effect of the vibration in a low frequency range, adversely affecting to track following of the relevant magnetic head.

## Claims

1. A magnetic disk storage apparatus having:
a magnetic disk assembly (10) including a plurality of magnetic disks (11),
magnetic head positioners (20a; 20b), each positioner being driven independently from each other by driving means (18, 50) to position magnetic heads (13a, 13b) supported thereby,
a housing (21) enclosing thereinside and securing thereto said magnetic disk assembly (10) and said magnetic head positioners (20a, 20b);
electronic control means for reducing interference of mechanical vibration caused by a start of a seek operation of a first of the magnetic head positioners (20a) and being imposed on the other (20b) of said magnetic head positioners;
said electronic control means providing a compensating signal for driving the driving means (18b) of said other magnetic head positioners (20b) in order to compensate off-track of the magnetic heads (13b) supported by said other magnetic head positioners (20b),
said apparatus being **characterized by**
a sensor means (6) coupled to said housing (21) for sensing said mechanical vibration being transferred from said first magnetic head positioner (20a), in an access direction and outputting a sense current which is proportional to the sensed vibration and
said electronic control means being a signal processing circuit (3,7,8,9) which is operatively connected to said sensor means (6) receiving said sense current, generating such a compensating signal which is proportional and following up said sensed mechanical vibration and transferring said generated compensating signal to said driving means (18b) for driving said other magnetic head positioners in controlled proportion to the actual vibration.

2. A magnetic disk storage apparatus of claim 1,
**characterized in that,**
the apparatus further comprises switch means (80) for delivering said compensating signal to said driving means,
said switch means (80) being conducted during a fine seek period and being non-conductive during a coarse seek period of said first magnetic head positioner (20a).

3. A magnetic disk storage apparatus of claim 2,
**characterized in that,**
said switch means (80) becomes conductive after a predetermined period since after said coarse seek period is terminated.

4. A magnetic disk storage apparatus of claim 1, 2 or 3,
**characterized in that,**
said sensor means comprises an acceleration sensor (6) including a piezoelectric accelerometer or a displacement sensor.

5. A magnetic disk storage apparatus of any one of the claims 1 to 4, characterized in that said sensor means (6) is secured to a surface of said housing (21).

6. A magnetic disk storage apparatus of any one of claims 1 to 5, characterized in that said plurality of magnetic head positioners (20a, 20b) are of linear type having linear access movement, and stacked vertically one above another, and the sense axis of said sensor means (6) coincides with the direction of said linear access movement seen in plan view.

7. A magnetic disk storage apparatus of any one of claims 1 to 6, characterized in that said plurality of magnetic head positioners (20a, 20b) are of linear type having a linear access movement and disposed horizontally on a plane in a centripetal, symmetrical arrangement with respect to a symmetry axis (Y-Y), and the sense axis of said sensor means (6) coincides with the said symmetry axis (Y-Y) of the arrangement of said magnetic head positioners (20a, 20b).

8. A magnetic disk storage apparatus of any one of claims 1 to 7, characterized in that said magnetic positioners (20a, 20b) are secured to said housing (21) through suspending means (132, 133) comprising a plurality of spring members (133) and a plurality of damping members (132) causing a low mechanical vibration resonant frequency of said magnetic head positioners (20a, 20b).

9. A magnetic disk storage apparatus of any one of claims 1 to 8, characterized in that said signal processing circuit comprises:
a mechanical vibration follow-up circuit (7) operatively connected to said sensor means (6), receiving said sense current and generating said compensating signal being in proportion to said sense current; and
a plurality of adders (8a, 8b) each of which is operatively connected to said mechanical vibration follow-up circuit (7),
a positioning controller (3a, 3b) for generating a position error signal, and said driving means (18a, 18b, 50a, 50b) of each magnetic head positioner (20a, 20b), said adder (8a, 8b) adding said compensating signal at least to said position error signal to form a composed signal for driving said driving means (18a, 18b, 50a, 50b), thereby, coil current of a coil of a motor contained in said driving means (18b, 50b) of said relevant second magnetic head positioner (20b) is compensated such that the effect of said mechanical vibration causing said off-track is cancelled.

10. A magnetic disk storage apparatus of claim 9, characterized in that said signal processing circuit further comprises a plurality of switches (5a, 5b) each of which is disposed between said mechanical vibration follow-up circuit (7) and each of said adders (8a, 8b), and controlled by a controller (4a, 4b) which is disposed to control each of said positioners (20a, 20b).

11. A magnetic disk storage apparatus of any one of claims 2 to 10, characterized in that said compensating signal is provided by i_{comp} given by the following formula:
${\text{i}}_{\text{comp}} \text{= m α/Bl}$
where
m: mass of the moving portion of said magnetic head positioner (20a, 20b)
α: acceleration detected basing on said sense signal
Bl: positioner force constant of said magnetic head positioner (20a, 20b).

12. A magnetic disk storage apparatus of any one of claims 9 to 11, characterized in that said mechanical vibration follow-up circuit (7) comprises:
a high-pass filter (70) operatively connected to said sensor means (6) for cutting direct current component of said sense current;
a low-pass filter (71) operatively connected to said high-pass filter (70), for filtering low frequency component of said sense current outputted from said sensor means (6); and
a gain controller (72) operatively connected to said low-pass filter (71), for controlling the gain level of said sense signal filtered by said low-pass filter (71).

13. A magnetic disk storage apparatus of claim 12, characterized in that said low-pass filter (71) has a low phase shift below 10 degrees and a high gain level in the specified low frequency range.

14. A magnetic disk storage apparatus of any one of claims 8 to 13, characterized in that said mechanical vibration resonant frequency of said magnetic head positioners (20a, 20b) is included within said/a predetermined low frequency range.

15. A magnetic disk storage apparatus of any one of claims 1 to 14, characterized in that said plurality of magnetic head positioners (20a, 20b) are of rotary type being rotatable around a center,
said magnetic head (13a, 13b) supported said magnetic head positioner (20a, 20b) is transferred along the surface of one of said magnetic disks (11) following an arc orbit having successively changing access directions which is represented by an average access direction.

16. A magnetic disk storage apparatus of claim 15, characterized in that said compensating signal is provided by a current i_{com} given given in the following formula:
${\text{i}}_{\text{com}} \text{= KJα/Blr.l}$
where
Blr: torque constant of said magnetic head positioner (20a, 20b)
l: rotating radius of said magnetic head (20a, 20b)
α: acceleration detected basing on said sense signal
J: rotation inertia momentum of said magnetic head positioner (20a, 20b)
K: a constant.

## Patentansprüche

1. Speichervorrichtung mit Magnetplatte
mit einer Magnetplatten-Anordnung (10) mit einer Vielzahl Magnetplatten (11);
mit Magnetkopf-Positionierern (20a,20b), von denen jeder Positionierer unabhängig von jedem anderen durch Antriebsmittel (18,50) zu bewegen ist, um die von den Positionierern gehalterten Magnetköpfe (13a,13b) zu positionieren;
mit einem Gehäuse (21), in dem sich diese Magnetplatten-Anordnung (10) und die Magnetkopf-Positionierer (20a,20b) befinden und fest angebracht sind;
mit elektronischer Steuervorrichtung zum Verringern einer Beeinflussung durch mechanische Vibration, die durch den Start eines Suchvorganges eines ersten dieser Magnetkopf-Positionierer (20a) hervorgerufen ist und die auf die anderen (20b) dieser Magnetkopf-Positionierer einwirkt,
wobei diese elektronische Steuervorrichtung ein Kompensationssignal für die Antriebsmittel (18b) dieser anderen Magnetkopf-Positionierer (20b) vorsieht, um Spurabweichung der Magnetköpfe (13b) zu kompensieren, die von den anderen Magnetkopf-Positionierern (20b) gehaltert sind,
wobei diese Vorrichtung **dadurch gekennzeichnet** ist,
daß eine mit dem Gehäuse (21) gekoppelte Sensoreinrichtung (6) vorgesehen ist, um solche mechanische Vibration zu detektieren, die von diesem ersten Magnetkopf-Positionierer (20a) übertragen wird, in einer Zugriffsrichtung, und um einen Sensorstrom zu liefern, der proportional der detektierten Vibration ist, und
daß die elektronische Steuereinrichtung ein signalverarbeitender Schaltkreis (3,7,8,9) ist, der betriebsmäßig mit der Sensoreinrichtung (6) verbunden ist und diesen Sensorstrom zugeführt bekommt, und der ein solches Kompensationssignal erzeugt, das proportional und nachfolgend der detektierten mechanischen Vibration ist, und dieses erzeugte Kompensationssignal auf die Antriebsmittel (18b) überträgt, um diese anderen Magnetkopf-Positionierer in der tatsächlichen Vibration entsprechend gesteuertem Maß zu bewegen.

2. Vorrichtung nach Anspruch 1,
gekennzeichnet dadurch,
daß die Vorrichtung desweiteren Schaltmittel (80) hat, um das Kompensationssignal den Antriebsmitteln zuzuführen,
wobei diese Schaltmittel (80) während einer Dauer des Fein-Suchens leitfähig sind und nicht leitfähig sind während einer Dauer des Grob-Suchens des ersten Magnetkopf-Positionierers.

3. Vorrichtung nach Anspruch 2,
gekennzeichnet dadurch,
daß die Schaltmittel (80) leitfähig werden nach einer vorgegebenen Dauer, beginnend nach Beendigung der Dauer des Grob-Suchens.

4. Vorrichtung nach Anspruch 1, 2 oder 3,
gekennzeichnet dadurch,
daß die Sensoreinrichtung einen Beschleunigungssensor (6) hat, der einen piezoelektrischen Beschleunigungsmesser oder einen Bewegungssensor einschließt.

5. Vorrichtung nach einem der Ansprüche 1 bis 4,
gekennzeichnet dadurch,
daß die Sensoreinrichtung (6) an der Oberfläche des Gehäuses (21) angebracht ist.

6. Vorrichtung nach einem der Ansprüche 1 bis 5,
gekennzeichnet dadurch,
daß diese Vielzahl Magnetkopf-Positionierer (20a,20b) solche eines linearen Typus sind, die lineare Zugriffsbewegung haben und die vertikal einer auf den anderen gestapelt sind und daß die Achse des Detektierens dieser Sensoreinrichtung (6) zusammenfällt mit der Richtung dieser linearen Zugriffsbewegung, gesehen in der Aufsicht.

7. Vorrichtung nach einem der Ansprüche 1 bis 6,
gekennzeichnet dadurch,
daß diese Vielzahl Magnetkopf-Positionierer (20a,20b) linearen Typus sind und eine lineare Zugriffsbewegung ausführen und diese horizontal auf einer Ebene in zentripetaler, symmetrischer Anordnung in Bezug auf eine Symmetrieachse (Y-Y) angeordnet sind und daß die Sensorachse dieser Sensoreinrichtung (6) mit dieser Symmetrieachse (Y-Y) der Anordnung dieser Magnetkopf-Positionierer (20a,20b) zusammenfällt.

8. Vorrichtung nach einem der Ansprüche 1 bis 7,
gekennzeichnet dadurch,
daß die Magnetkopf-Positionierer (20a,20b) an diesem Gehäuse (21) mittels einer Aufhängevorrichtung (132,133) angebracht sind, die eine Vielzahl Federkörper (133) und eine Vielzahl Dämpfungskörper (132) umfaßt, womit eine tiefe Renonanzfrequenz mechanischer Vibration der Magnetkopf-Positionierer (20a,20b) bewirkt ist.

9. Vorrichtung nach einem der Ansprüche 1 bis 8,
gekennzeichnet dadurch,
daß dieser Signalverarbeitungs-Schaltkreis umfaßt:
einen mechanische Vibration nachführenden Schaltkreis (7), der betriebsmäßig mit der Sensoreinrichtung (6) verbunden ist, den Sensorstrom zugeführt erhält und das Kompensationssignal erzeugt, das proportional diesem Sensorstrom ist; und
eine Vielzahl Addierschaltungen (8a,8b), die eine jede betriebsmäßig mit dem mechanische Vibration nachführenden Schaltkreis (7) verbunden sind,
eine Positionierüberwachung (3a,3b) zum Erzeugen eines Positions-Fehlersignals und die Antriebsmittel (18a,18b,50a,50b) eines jeden Magnetkopf-Positionierers (20a,20b), wobei diese Addierschaltung (8a,8b) dieses Kompensationssignal wenigstens diesem Positions-Fehlersignal zuaddiert, um ein zusammengesetztes Signal zum Antrieb dieser Antriebsmittel (18a,18b,50a,50b) zu bilden, wodurch ein Spulenstrom einer Spule eines Motors, enthalten in diesem Antriebsmittel (18b,50b) des relevanten zweiten Magnetkopf-Positionierers (20b) derart kompensiert wird, daß der Effekt dieser mechanischen Vibration, der Spurabweichung verursacht, behoben ist.

10. Vorrichtung nach Anspruch 9,
gekennzeichnet dadurch,
daß dieser signalverarbeitende Schaltkreis desweiteren eine Vielzahl Schalter (5a,5b) hat, von denen ein jeder zwischen diesem mechanische Vibration nachführenden Schaltkreis (7) und einer jeden dieser Addierschaltungen (8a,8b) liegt und mittels einer Steuerung (4a,4b) gesteuert wird, die angeordnet ist, einen jeden dieser Positionierer (20a,20b) zu steuern.

11. Vorrichtung nach einem der Ansprüche 2 bis 10,
gekennzeichnet dadurch,
daß das Kompensationssignal, das als i_{comp} vorgesehen ist, bestimmt ist durch die Formel:
${\text{i}}_{\text{comp}} \text{= mα/B1,}$
worin
m die Masse des sich bewegenden Teils dieses Magnetkopf-Positionierers (20a,20b) ist
α die auf dem Sensorsignal beruhend detektierte Beschleunigung ist
B1 die Positionierer-Kraftkonstante dieses Magnetkopf-Positionierers (20a,20b) ist.

12. Vorrichtung nach einem der Ansprüche 9 bis 11,
gekennzeichnet dadurch,
daß der mechanische Vibration nachführende Schaltkreis (7) umfaßt:
ein Hochpaßfilter (70), das mit der Sensoreinrichtung (6) verbunden ist, um die Gleichstromkomponente des Sensorstroms zu unterdrücken;
ein Tiefpaßfilter (71), das mit dem Hochpaßfilter (70) verbunden ist, um die hochfrequente Komponente des Sensorstroms zu filtern, der von der Sensoreinrichtung (6) geliefert wird, und
eine Verstärkungsregelung (72), die mit dem Tiefpaßfilter (71) verbunden ist, um den Verstärkungspegel des Sensorsignals zu regeln, das mittels des Tiefpaßfilters (71) gefiltert worden ist.

13. Vorrichtung nach Anspruch 12,
gekennzeichnet dadurch,
daß das Tiefpaßfilter (71) geringe Phasendrehung unter 10 Grad hat und hohe Verstärkung in dem ausgewählten Niederfrequenzbereich hat.

14. Vorrichtung nach einem der Ansprüche 8 bis 13,
gekennzeichnet dadurch,
daß die Resonanzfrequenz der mechanischen Vibration dieser Magnetkopf-Positionierer (20a,20b) in diesem/einem vorgegebenen Niederfrequenzbereich liegt.

15. Vorrichtung nach einem der Ansprüche 1 bis 14,
gekennzeichnet dadurch,
daß die Vielzahl Magnetkopf-Positionierer (20a,20b) vom Drehtyp sind und um ein Zentrum herum drehbar sind,
wobei der von diesem Magnetkopf-Positionierer (20a,20b) gehalterte Magnetkopf (13a,13b) entlang der Oberfläche einer der Magnetplatten (11) in Bogenform bewegt wird, wobei er aufeinanderfolgend sich ändernde Zugriffsrichtungen hat, die durch eine mittlere Zugriffsrichtung wiedergegeben ist.

16. Vorrichtung nach Anspruch 15,
gekennzeichnet dadurch,
daß das Kompensationssignal durch einen Strom i_{com} gegeben ist entsprechend der Formel:
${\text{i}}_{\text{com}} \text{= KJα/B1r.1}$
worin
B1r die Drehmomentkonstante des Magnetkopf-Positionierers (20a,20b) ist
1 der Drehradius des Magnetkopfes (20a,20b) ist
α die auf dem Sensorsignal beruhende Beschleunigung ist
J das Rotations-Trägheitsmoment des Magnetkopf-Positionierers (20a,20b) ist
K eine Konstante ist.

## Revendications

1. Appareil de mémorisation à disques magnétiques comprenant
un ensemble (10) comportant plusieurs disques magnétiques (11),
des organes (20a ; 20b) de positionnement de têtes magnétiques, chaque organe de positionnement étant piloté indépendamment par un dispositif de pilotage (18, 50) afin que les têtes magnétiques (13a, 13b) qu'il supporte soient positionnées,
un boîtier (21) entourant et fixant l'ensemble (10) à disques magnétiques et les organes (20a, 20b) de positionnement de têtes magnétiques,
un dispositif électronique de commande destiné à réduire les interférences de la vibration mécanique provoquée par le début d'une opération de recherche d'un premier des organes (20a) de positionnement de têtes magnétiques et imposées à l'autre (20b) des organes de positionnement de têtes magnétiques,
le dispositif électronique de commande formant un signal de compensation destiné au pilotage des dispositifs de pilotage (18b) des autres organes de positionnement de têtes magnétiques (20b) afin que le décalage des têtes magnétiques (13b), supportées par les autres organes (20b) de positionnement de têtes magnétiques et par rapport à la piste, soit compensé,
l'appareil étant caractérisé par
un dispositif capteur (6) couplé au boîtier (21) et destiné à détecter la vibration mécanique transférée du premier organe (20a) de positionnement de têtes magnétiques, dans la direction d'accès, et à transmettre un courant de détection qui est proportionnel à la vibration détectée, et en ce que
le dispositif électronique de commande est un circuit (3, 7, 8, 9) de traitement de signaux qui est connecté au dispositif capteur (6) qui reçoit le courant de détection, et qui crée un signal de compensation proportionnel à la vibration mécanique détectée et suivant cette vibration, et transfère le signal de compensation créé de cette manière aux dispositifs (18b) de pilotage des autres organes de positionnement de têtes magnétiques en proportion réglée de la vibration réelle.

2. Appareil de mémorisation à disques magnétiques selon la revendication 1, caractérisé en ce que
l'appareil comporte en outre un dispositif (80) de commutation destiné à transmettre le signal de compensation aux dispositifs de pilotage,
le dispositif (80) de commutation assurant la conduction pendant une période de recherche fine et n'assurant pas la conduction pendant une période de recherche grossière du premier organe (20a) de positionnement de têtes magnétiques.

3. Appareil de mémorisation à disques magnétiques selon la revendication 2, caractérisé en ce que le dispositif de commutation (80) devient conducteur après l'écoulement d'une période prédéterminée suivant la fin de la période de recherche grossière.

4. Appareil de mémorisation à disques magnétiques selon la revendication 1, 2 ou 3, caractérisé en ce que le dispositif capteur comprend un capteur d'accélération (6) qui comporte un accéléromètre piézoélectrique ou un capteur de déplacement.

5. Appareil de mémorisation à disques magnétiques selon l'une quelconque des revendications 1 à 4, caractérisé en ce que le dispositif capteur (6) est fixé à une surface du boîtier (21).

6. Appareil de mémorisation à disques magnétiques selon l'une quelconque des revendications 1 à 5, caractérisé en ce que les organes (20a, 20b) de positionnement de têtes magnétiques sont de type linéaire ayant un mouvement linéaire d'accès, et sont empilés verticalement les uns sur les autres, et l'axe de détection du dispositif capteur (6) coïncide avec la direction du mouvement linéaire d'accès, en vue en plan.

7. Appareil de mémorisation à disques magnétiques selon l'une quelconque des revendications 1 à 6, caractérisé en ce que les organes (20a, 20b) de positionnement de têtes magnétiques sont de type linéaire, ayant un mouvement linéaire d'accès et sont disposés horizontalement sur un plan avec une disposition symétrique centripète par rapport à l'axe de symétrie (Y-Y), et l'axe de détection du dispositif capteur (6) coïncide avec l'axe de symétrie (Y-Y) de la disposition des organes (20a, 20b) de positionnement de têtes magnétiques.

8. Appareil de mémorisation à disques magnétiques selon l'une quelconque des revendications 1 à 7, caractérisé en ce que les organes (20a, 20b) de positionnement de têtes magnétiques sont fixés au boîtier (21) par des dispositifs de suspension (132, 133) qui comportent plusieurs organes à ressort (133) et plusieurs organes d'amortissement (132), donnant une faible fréquence de vibration mécanique aux organes (20a, 20b) de positionnement de têtes magnétiques.

9. Appareil de mémorisation à disques magnétiques selon l'une quelconque des revendications 1 à 8, caractérisé en ce que le circuit de traitement de signaux comporte
un circuit (7) destiné à suivre la vibration mécanique, le circuit étant connecté, pendant le fonctionnement, au dispositif capteur (6), recevant le courant de détection et créant le signal de compensation en proportion du courant de détection, et
plusieurs additionneurs (8a, 8b) connectés chacun au circuit (7) destiné à suite la vibration mécanique,
un organe (3a, 3b) de positionnement destiné à créer un signal d'erreur de position, et le dispositif de pilotage (18a, 18b, 50a, 50b) de chaque organe (20a, 20b) de positionnement de têtes magnétiques, l'additionneur (8a, 8b) ajoutant le signal de compensation au moins au signal d'erreur de position pour la formation d'un signal composé de pilotage du dispositif de pilotage (18a, 18b, 50a, 50b), si bien que le courant d'un enroulement d'un moteur logé dans le dispositif de pilotage (18b, 50b) du second organe correspondant (20b) de positionnement de têtes magnétiques est compensé afin que l'effet de la vibration mécanique provoquant le décalage par rapport à la piste, soit compensé.

10. Appareil de mémorisation à disques magnétiques selon la revendication 9, caractérisé en ce que le circuit de traitement de signaux comporte en outre plusieurs commutateurs (5a, 5b) disposés chacun entre le circuit (16) destiné à suivre la vibration mécanique et chacun des additionneurs (8a, 8b) et commandé par un organe de commande (4a, 4b) qui est disposé afin qu'il commande chacun des organes de positionnement (20a, 20b).

11. Appareil de mémorisation à disques magnétiques selon l'une quelconque des revendications 2 à 10, caractérisé en ce que le signal de compensation est formé par un courant (i_{comp}) donné par la relation suivante
${\text{i}}_{\text{comp}} \text{= mα/B1,}$
m étant la masse de la partie mobile de l'organe (20a, 20b) de positionnement de têtes magnétiques, α étant l'accélération détectée d'après le signal de détection, et B1 étant une constante de force de l'organe (20a, 20b) de positionnement de têtes magnétiques.

12. Appareil de mémorisation à disques magnétiques selon l'une des revendications 9 à 11, caractérisé en ce que le circuit (7) destiné à suivre la vibration mécanique comprend
un filtre passe-haut (70) connecté au dispositif capteur (6) et destiné à arrêter la composante en courant continu du courant de détection,
un filtre passe-bas (71) connecté au filtre passe-haut (70) et destiné à filtrer la composante à basse fréquence du courant de détection transmis par le dispositif capteur (6), et
un organe (72) de réglage de gain connecté au filtre passe-bas (71) et destiné à régler le niveau de gain du signal de détection filtré par le filtre passe-bas (71).

13. Appareil de mémorisation à disques magnétiques selon la revendication 12, caractérisé en ce que le filtre passe-bas (71) présente un petit déphasage inférieur à 10 degrés et un niveau élevé de gain dans la gamme spécifiée des faibles fréquences.

14. Appareil de mémorisation à disques magnétiques selon l'une quelconque des revendications 8 à 13, caractérisé en ce que la fréquence de résonance de vibration mécanique des organes (20a, 20b) de positionnement de têtes magnétiques est contenue dans la plage prédéterminée des faibles fréquences ou dans une plage prédéterminée de faibles fréquences.

15. Appareil de mémorisation à disques magnétiques selon l'une quelconque des revendications 1 à 14, caractérisé en ce que les organes (20a, 20b) de positionnement de têtes magnétiques sont de type rotatif et peuvent tourner autour d'un centre, et
la tête magnétique (13a, 13b) supportée par l'organe (20a, 20b) de positionnement de têtes magnétiques est transportée le long de la surface de l'un des disques magnétiques (11) en suivant une orbite en arc de cercle ayant des directions d'accès qui changent successivement et sont représentées par une direction moyenne d'accès.

16. Appareil de mémorisation à disques magnétiques selon la revendication 15, caractérisé en ce que le signal de compensation est donné par un courant i_{com} représenté par la formule suivante
${\text{i}}_{\text{com}} \text{= KJα/Blr.l}$
Blr étant la constante de couple de l'organe (20a, 20b) de positionnement de têtes magnétiques, l étant le rayon de rotation de la tête magnétique (20a, 20b), α étant l'accélération détectée d'après le signal de détection, J étant le moment d'inertie de rotation de l'organe (20a, 20b) de positionnement de têtes magnétiques, et K étant une constante.
